# EUROPÄISCHE PATENTSCHRIFT

(11) **EP 1 522 131 B1**
(45) Veröffentlichungstag und Bekanntmachung des Hinweises auf die Patenterteilung: **02.03.2011**
(21) Anmeldenummer: 03762605.8
(22) Anmeldetag: 03.07.2003
(51) Int. Cl.: H02H 7/085, H02K 11/00

(54) **ANORDNUNG UND VERFAHREN ZUM SCHUTZ VOR BERLAST EINES ELEKTR OMOTORS**
CIRCUIT AND METHOD FOR PROTECTING AGAINST OVERLOAD OF AN ELECTRIC MOTOR
CIRCUIT ET PROCEDE POUR PROTEGER UN MOTEUR ELECTRIQUE CONTRE LES SURCHARGES

(30) Priorität: 04.07.2002 DE 10230253
(43) Veröffentlichungstag der Anmeldung: 13.04.2005
(73) Patentinhaber: Behr GmbH & Co. KG, 70469 Stuttgart (DE)
(72) Erfinder: BIELESCH, Thomas, 75417 Mühlacker (DE)
(74) Vertreter: Grauel, Andreas
(86) Internationale Anmeldenummer: PCT/EP2003/007101
(87) Internationale Veröffentlichungsnummer: WO 2004/006406

(56) Entgegenhaltungen:
- US-A- 3 638 718

## Beschreibung

Die Erfindung betrifft eine Anordnung und ein Verfahren zum Schutz vor Überlast eines Elektromotors, insbesondere eines elektrisch angetriebenen Lüftergebläses für ein Fahrzeug. Eine Anordnung und ein Verfahren von Schutz vor Überlast sind beispielweise in US-A-3 638 718 als nächstliegenden Stand der Technik angesehen.

In Fahrzeugen, insbesondere Verbrennungsmaschinen werden zur Kühlung der Verbrennungsmaschinen elektrisch betriebene Lüftergebläse eingesetzt. Hierdurch ist eine gezielte Steuerung und Regelung des Wärmehaushalts der Verbrennungsmaschine möglich. Um das Lüftergebläse oder den Lüfter in verschiedenen Drehzahlstufen betreiben zu können, werden beispielsweise zwei Lüftergebläse mittels eines Umschaltelements, z.B. einem Umschaltrelais sowohl in Reihe für eine Minimaldrehzahl als auch in Parallelschaltung für eine Maximaldrehzahl geschaltet.

Bei einem Betrieb der Lüfter in Parallelschaltung wird im Fehlerfall einer der Lüfter, z.B. ein Lüfter ist blockiert, aufgrund eines daraus resultierenden Überstroms ein Sicherungselement, z.B. eine Bordnetzsicherung ausgelöst und der Stromkreis unterbrochen. Demgegenüber kommt es im Fehlerfall von in Reihenschaltung angeordneten Lüftern zu einer Erhöhung des Innenwiderstands des Lüfters, wodurch der Auslösestrom des Sicherungselements unterschritten bleibt.

Üblicherweise werden im Bereich der Klimatisierung zum Schutz vor Übertemperaturen reversible Thermoschutzschalter in den Stromkreis der betreffenden thermischen Komponenten geschaltet, wodurch im Fehlerfall, d.h. bei Übertemperatur, der Stromfluss in diesem Stromkreis unterbrochen wird. Dazu ist der Thermoschutzschalter als Öffner ausgeführt. Da der Thermoschutzschalter bekannterweise reversibel ausgelegt ist, wird dieser nach Unterschreitung der kritischen Temperatur wieder eingeschaltet. Solche Schutzschalter sind im Motorkühlungsbereich aufgrund ihres Temperaturbereiches nur begrenzt einsetzbar.

Der Erfindung liegt daher die Aufgabe zugrunde, eine Anordnung zum Schutz vor Überlast eines Elektromotors anzugeben, welche auch in Reihenschaltung von mehreren Elektromotoren eine hinreichend gute Absicherung bewirkt. Des Weiteren soll ein besonders zum Schutz eines Elektromotors vor Überlast geeignetes Verfahren angegeben werden.

Die Aufgabe wird erfindungsgemäß gelöst durch eine Anordnung zum Schutz vor Überlast eines Elektromotors, wobei mindestens ein Umschaltelement zur drehzahlabhängigen Steuerung von zwei in Serie geschalteten Elektromotoren vorgesehen ist, bei der parallel zum Elektromotor ein als Schließer ausgebildetes Schalterelement geschaltet ist, welches bei Übertemperaturen ein Kurzschließen des betreffenden Elektromotors bewirkt.

Die Erfindung geht dabei von der Überlegung aus, dass es im Falle von Übertemperaturen an einem der Elektromotoren oder an beiden Elektromotoren, z.B. durch Blockierung eines durch den Elektromotor angetriebenen Lüfters, beispielsweise durch Eindringen eines Fremdkörpers, zu einer erheblichen thermischen Belastung, insbesondere zu einer übermäßigen Erwärmung kommen kann, welche zu einem Ansteigen des Innenwiderstands des Elektromotors führt. Dies wiederum führt dazu, dass eine im Stromkreis des Elektromotors angeordnete Sicherung aufgrund des durch den erhöhten Innenwiderstands begrenzten Stromfluß nicht anspricht. Daher sollte das Ansteigen des Innenwiderstands des Elektromotors auf ein derartiges Maß reduziert werden, dass die im Stromkreis zum Elektromotor angeordnete Sicherung auslöst. Hierzu ist bevorzugt ein als Schließer ausgebildetes Schalterelement parallel zum betreffenden Elektromotor geschaltet, wobei das Schalterelement im Fall von Übertemperaturen die Anschlussklemmen des. Elektromotors kurzschließt. Hierdurch wird der Innenwiderstand des Elektromotors derart deutlich reduziert, dass eine daraus resultierende Stromerhöhung einen zulässigen vorgebbaren Grenzwert überschreitet. Darüber hinaus ist durch eine derartige Parallelschaltung des Schalterelements zum Elektromotor eine Erfassung der kritischen Temperaturen direkt am die Temperaturerhöhung bewirkenden Element ermöglicht.

In einer bevorzugten Ausführungsform ist jedem Elektromotor ein Schalterelement zugeordnet, wobei die Schalterelemente unabhängig voneinander auslösen können. Schaltet hierbei im Fehlerfall nur einer der Elektromotoren selbsttätig mittels des zugehörigen Schalterelements ab, kann der andere bestimmungsgemäß, bevorzugt mit erhöhter Drehzahl zur Erhöhung der Kühl- und somit Luftstromleistung weiter betrieben werden.

Um einen temperaturbedingten Fehlerfall sicher erkennen zu können, ist das Schalterelement zweckmäßigerweise als Thermoschutzschalter, insbesondere als Bimetallstreifen ausgebildet. Ein derartiger thermischer Auslöser, insbesondere der Bimetallstreifen, biegt sich bei Erwärmung durch und löst bei einem Überstrom aus.

Für eine besonders sichere und einfache Detektion von Übertemperaturen am Elektromotor ist das Schalterelement im Elektromotor integriert. In einer bevorzugten Ausführungsform ist dabei das Schalterelement auf der Bestükkungsseite einer Bürstenplatte des Elektromotors in Parallelschaltung zum Elektromotor angeordnet. Hierdurch ist ein hinreichend guter Wärmeübergang zur Identifizierung der Übertemperaturen und somit der Überlast am jeweiligen Elektromotor gegeben. Darüber hinaus beansprucht eine derartige Anordnung des Schalterelements auf der Bestückungsseite der Bürstenplatte wenig Bauraum und ist somit besonders einfach in auf der Bestükkungsseite vorhandenen Freiräumen problemlos einbringbar und demzufolge leicht nachrüstbar. Des Weiteren benötigt ein derartig angeordnetes Schalterelement keinen zusätzlichen Verdrahtungsaufwand. Außerdem ist hierbei ein geringerer Übergangswiderstand bei Kurzschluß des Schalterelements gegeben.

Vorzugsweise ist das Schalterelement derart ausgelegt, dass eine Auslösung oberhalb einer spezifizierten Motorbetriebstemperatur erfolgt. Mit anderen Worten: Für eine einfache Ausführung des Schalterelements ist es ausreichend, dass dessen Toleranzbereiche zum Auslösen oberhalb eines vorgebbaren kritischen Temperaturbereiches des jeweiligen Elektromotors liegt.

Zusätzlich ist zweckmäßigerweise ein Sicherungselement, beispielsweise eine Schmelzsicherung oder ein anderes elektronisches Sicherungsbauelement, zur Abschaltung eines den Elektromotor speisenden Stromkreises bei Überschreitung eines vorgebbaren kritischen Grenzwertes vorgesehen. Mit anderen Worten: Zusätzlich zur temperaturabhängigen Auslösung des Schalterelementes und somit zu einer ersten Stufe der Fehlerbehebung durch Kurzschluss des fehlerbehafteten Elektromotors kann in einer zweiten Stufe ein Sicherungselement zur stromabhängigen Auslösung vorgesehen sein. Hierdurch wird bei Überschreitung eines vorgebbaren kritischen Stromwertes der Stromkreis, d.h. die Stromversorgung des Elektromotors unterbrochen. Zur Vermeidung von elektromagnetischen Störungen, verursacht durch das Motorsystem, ist zweckmäßigerweise ein Entstörkondensator oder ein anderes Entstörbauelement parallel zum Schalterelement geschaltet. Als Entstörkondensator wird ein herkömmlicher Kondensator verwendet.

Die bezüglich des Verfahrens zum Schutz vor Überlast des Elektromotors, insbesondere des elektrisch angetriebenen Lüftergebläses, gestellte Aufgabe wird erfindungsgemäß gelöst, indem zwei in Serie geschaltete Elektromotoren mittels mindestens eines Umschaltelements drehzahlabhängig gesteuert werden, wobei bei Übertemperaturen mittels eines parallel zum jeweiligen Elektromotor und als Schließer ausgebildeten Schalterelements der Elektromotor kurzgeschlossen wird. Vorzugsweise wird der Innenwiderstand des Elektromotors dabei derart reduziert, dass eine daraus resultierende Stromerhöhung den vorgegebenen Grenzwert des Sicherungselements überschreitet. Hierdurch ist sichergestellt, dass eine im Stromkreis angeordnete Sicherung sicher auslöst. Je nach Art und Ausführung des Stromkreises und somit in Abhängigkeit von der Größe der den Stromkreis absichernden Sicherung ist ein anderer Grenzwert und somit eine andere Auslegung des thermischen Schalterelements möglich.

Die mit der Erfindung erzielten Vorteile bestehen insbesondere darin, dass durch einen bei Übertemperaturen bewirkten Kurzschluss eines Elektromotors mittels einer Parallelschaltung eines als Schließer ausgebildeten Schalterelements zum Elektromotor eine besonders sichere und einfache Brandschutzanordnung auch für zwei in Serie geschaltete Elektromotoren (auch Doppellüfter genannt) ermöglicht ist. Durch die Integration des thermischen Schalterelements im Elektromotor selbst ist eine Erfassung und Überwachung der kritischen Temperaturen direkt an der Wärmequelle möglich. Durch ein dem jeweiligen Motor oder Lüfter zugeordnetes Schalterelement ist eine separate Überwachung und somit auch getrennte Sicherheitsabschaltung des jeweiligen fehlerhaften Motors sichergestellt. Nach Behebung der Störung kann die Normalfunktion des betreffenden Elektromotors durch Austauschen der ausgelösten Sicherung wieder aktiviert werden.

Ausführungsbeispiele der Erfindung werden anhand einer Zeichnung näher erläutert. Darin zeigen:
- Fig. 1A, 1B: ein schaltungstechnisches Schemata einer Anordnung zum Schutz vor überlast von zwei in Serie geschalteten Elektromotoren mit einem jeweils zugehörigen Schalterelement im Normalzustand,
- Fig. 2A, 2B: ein schaltungstechnisches Schemata der Anordnung nach Figur 1 im ausgelösten Zustand,
- Fig. 3A, 3B: schematisch die Anordnung nach Figur 1 für einen einzelnen Elektromotor im eingebauten Zustand, und
- Fig. 4A, 4B: schematisch die Anordnung nach Figuren 3A, 3B mit einem par- allel zum Schalterelement geschalteten Entstörkondensator.

Einander entsprechende Teile sind in allen Figuren mit den gleichen Bezugszeichen versehen.

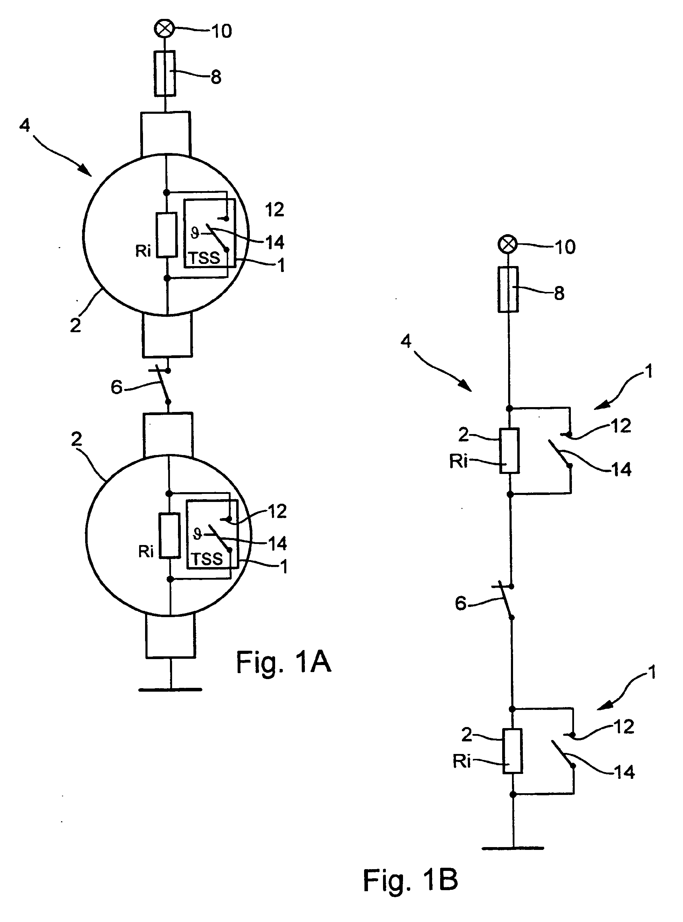

Figur 1A zeigt eine Schaltung für eine Anordnung 1 zum Schutz (im weiteren kurz Schutzanordnung 1 genannt) vor Überlast eines Elektromotors 2. Das Ausführungsbeispiel zeigt zur Lüftung einer nicht näher dargestellten Verbrennungsmaschine eines Fahrzeugs zwei Elektromotoren 2, welche in einem Stromkreis 4 in Reihe geschaltet sind. Die in Reihe geschalteten Elektromotoren 2 dienen dem Antrieb von jeweils einem zugehörigen nicht näher dargestellten Lüftergebläse zur Kühlung der Verbrennungsmaschine.

Zum Betreiben eines derartigen zweistufigen Lüftersystems für die Verbrennungsmaschine in verschiedenen Drehzahlstufen n können die beiden Elektromotoren 2 mittels eines Umschaltelements 6 zum einen in Reihe für eine Minimaldrehzahl und zum anderen parallel für eine Maximaldrehzahl geschaltet werden. Zur Absicherung des Stromkreises 4 ist des Weiteren ein Sicherungselement 8 in Reihe zu den Elektromotoren 2 geschaltet. Über eine Ausgangsklemme 10 sind die Elektromotoren 2 mit einer nicht näher dargestellte Stromversorgung, z.B. eine Batterie verbunden.

Um den jeweiligen Lüfter und dessen Elektromotor 2 gegen eine Überlast, wie dies beispielsweise bei einer Blockierung des Gebläses oder des Lüfters auftreten kann, zu schützen, umfasst die Schutzanordnung 1 ein als Schließer 12 ausgebildetes Schalterelement 14, welches parallel zum Elektromotor 2 geschaltet ist. Je nach Art und Ausführung der Schutzanordnung 1 kann je Elektromotor 2 ein zugehöriges Schalterelement 14 vorgesehen sein. Das Schalterelement 14 ist bevorzugt als Thermoschutzschalter, z.B. als Bimetallstreifen ausgebildet.

Im Normalbetrieb des Stromkreises 4, d.h. im Normalbetrieb des aus zwei in Reihe geschalteten Elektromotoren 2 gebildeten Lüftersystems sind die Schließer 12 geöffnet. Der Normalzustand des Schließers 12 ist in den Figuren 1A und 1B (= Stromersatzschaltbild) dargestellt.

Kommt es nun zu Übertemperaturen, z.B. durch Blockierung eines der Lüfter, d.h. eine kritische Temperatur wird überschritten und erhöht sich dadurch der Innenwiderstand Ri des jeweiligen Elektromotors 2, so dass ein zur Auslösung des Sicherungselements 8 erforderlicher Auslösestrom, insbesondere der vorgegebene Grenzwert, unterschritten bleiben würde, hätte dies wiederum eine erhebliche thermische Belastung zur Folge.

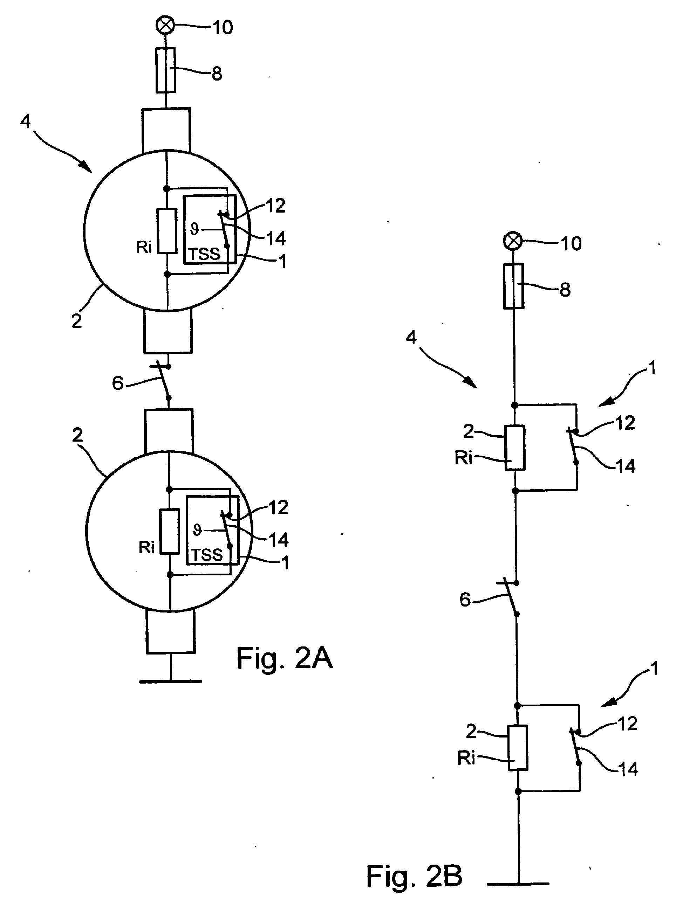

Zur Vermeidung derartiger thermischer Belastungen ist das Schalterelement 14 derart ausgelegt, dass eine Auslösung des Schließers 12 bei einer Temperatur ϑ oberhalb der spezifizierten Betriebstemperatur erfolgt. D.h. der Schließer 12 wird geschlossen, wie dies in den Figuren 2A und 2B dargestellt ist. Dies bewirkt, dass der betreffende Elektromotor 2 kurzgeschlossen wird, so dass der Innenwiderstand Ri reduziert ist. Die Reduzierung des Innenwiderstands Ri führt zu einer Stromerhöhung, wobei es bei Überschreitung eines kritischen Werts, beispielsweise des spezifizierten Grenzwerts, zu einer Auslösung des Sicherungselements 8 kommt und der Stromkreis 4 unterbrochen wird. Somit werden zwei Sicherheitskriterien zur Auslösung von zwei separaten Schutzelementen genutzt - zum einen wird eine kritische Temperatur ϑ zur Reduzierung des Innenwiderstands Ri des Elektromotors 2 durch Kurzschluss mittels des Schalterelements 14 genutzt und zum anderen wird ein kritischer Stromwert zur sicherheitsrelevanten Abschaltung des Stromkreises 4 des betreffenden Elektromotors 2 mittels des Sicherungselements 8 genutzt.

Je nach Art und Ausführung der Schutzanordnung 1 kann im Fehlerfall nur einer der Elektromotoren 2 mittels des Schalterelements 14 kurzgeschlossen werden, der andere Elektromotor 2 wird mit erhöhter Drehzahl n weiter betrieben. Hierbei wird das Sicherungselement 8 nicht ausgelöst.

Alternativ oder zusätzlich zum Schutz des jeweiligen Elektromotors 2 mittels des Schalterelements 14 können die Elektromotoren 2 mittels des Umschaltelements 6 parallel geschaltet werden. Dies führt dann zu einem sicheren Ansprechen des Sicherungselementes 8 im Fehlerfall.

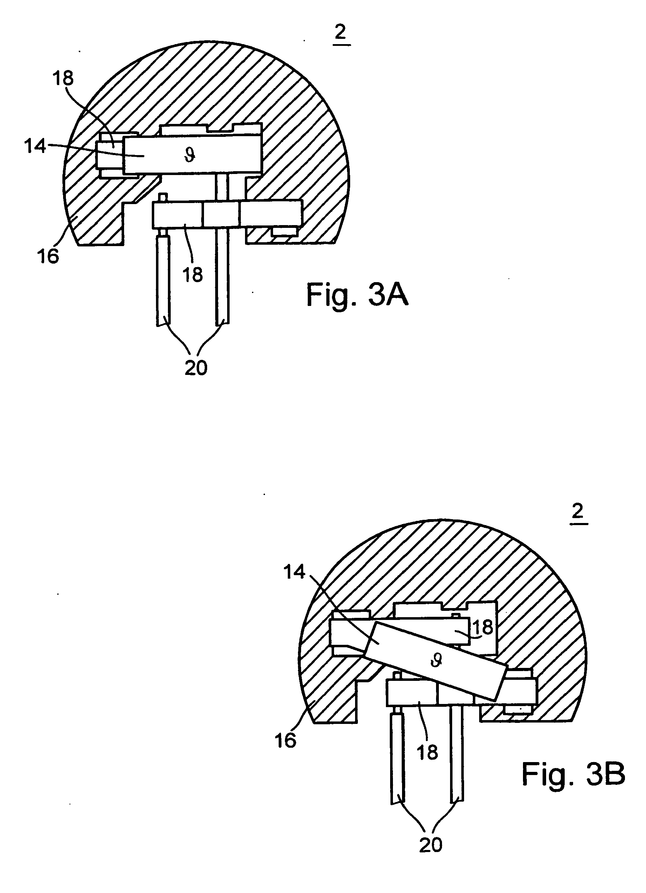

Die Figuren 3A und 3B zeigen verschiedene Ausführungen für einen Einbau des Schalterelements 14 am jeweiligen Elektromotor 2. Für eine besonders sichere Identifizierung der thermischen Belastung und somit ein rechtzeitiges Auslösen der Schutzanordnung 1 bei einer Überlast, insbesondere bei Übertemperaturen ist das Schalterelement 14 parallel zum jeweiligen Elektromotor 2, insbesondere unmittelbar in Nähe des Ortes, an welchem die Wärme im Störungsfall entsteht, geschaltet. Hierzu ist das Schalterelement 14 bevorzugt im jeweiligen Elektromotor 2 integriert.

In einer bevorzugter Ausführungsform wird das Schalterelement 14 auf der Bestückungsseite einer Bürstenplatte 16 des Elektromotors 2 angeordnet. Zur Versorgung des Elektromotors 2 sind zwei Stromschienen 18 der als Trägerplatte ausgebildeten Bürstenplatte 16 mit Versorgungsleitungen 20 verbunden. Für einen besonders guten Übergangswiderstand ist das Schalterelement 14 zwischen die beiden Stromschienen 18 geschaltet, wie dies beispielhaft in Figur 3A und 3B dargestellt ist.. Dabei ist das Schalterelement 14 gegenüber den Stromschienen 18 bzw. der Bürstenplatte 16 hinreichend gut elektrisch isoliert.

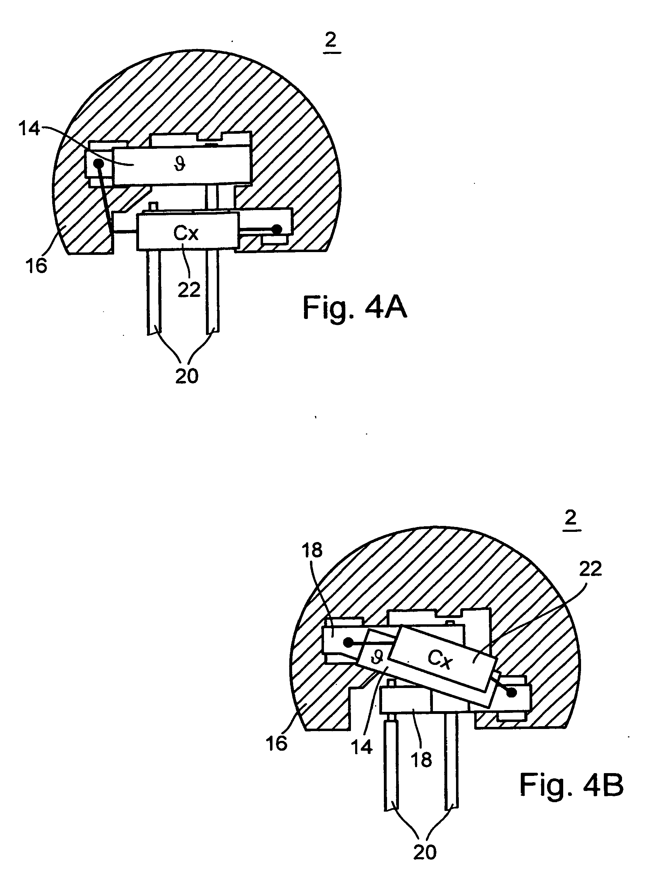

Zur Vermeidung von elektromagnetischen Störungen bei Auslösung des als Schließer 12 ausgebildeten Schalterelements 14 kann parallel zu diesem ein Entstörkondensator 22 geschaltet sein. Dies ist beispielhaft für die verschiedenen Anordnungsformen des Schalterelements 14 zwischen den beiden Stromschienen 18 in den Figuren 4A bzw. 4B dargestellt.

### Bezugszeichenliste

- 1: Anordnung zum Schutz vor Überlast eines Elektromotors
- 2: Elektromotor
- 4: Stromkreis
- 6: Umschaltelement
- 8: Sicherungselement
- 10: Ausgangsklemme
- 12: Schließer
- 14: Schalterelement
- 16: Bürstenplatte
- 18: Stromschienen
- 20: Versorgungsleitungen
- 22: Entstörkondensator

## Patentansprüche

1. Anordnung (1) zum Schutz vor Überlast eines Elektromotors (2), insbesondere eines elektrisch angetriebenen Lüftergebläses für ein Fahrzeug, mit mindestens einem Umschaltelement (6) zur drehzahlabhängigen Steuerung von zwei in Serie geschalteten Elektromotoren (2), bei der parallel zum Elektromotor (2) ein als Schließer (12) ausgebildetes Schalterelement (14) geschaltet ist, welches bei Übertemperaturen ein Kurzschließen des betreffenden Elektromotors (2) bewirkt.

2. Anordnung nach Anspruch 1, bei dem jedem Elektromotor (2) ein Schalterelement (14) zugeordnet ist, welche unabhängig voneinander auslösen.

3. Anordnung nach Anspruch 1 oder 2, bei dem das Schalterelement (14) als Thermoschutzschalter, insbesondere als Bimetallstreifen ausgebildet ist.

4. Anordnung nach einem der Ansprüche 1 bis 3, bei dem das Schalterelement (14) im Elektromotor (2) integriert ist.

5. Anordnung nach einem der Ansprüche 1 bis 4, bei dem das Schalterelement (14) auf der Bestückungsseite einer Bürstenplatte (16) des Elektromotors (2) in Parallelschaltung zum Elektromotor (2) angeordnet ist.

6. Anordnung nach einem der Ansprüche 1 bis 5, bei dem das Schalterelement (14) derart ausgelegt ist, dass eine Auslösung bei einer Temperatur (ϑ) oberhalb einer spezifizierten Motorbetriebstemperatur erfolgt.

7. Anordnung nach einem der Ansprüche 1 bis 6, bei dem ein Sicherungselement (8) zur Abschaltung eines den Elektromotor (2) speisenden Stromkreises (4) bei Überschreitung eines vorgebbaren kritischen Grenzwertes vorgesehen ist.

8. Anordnung nach einem der Ansprüche 1 bis 7, bei dem parallel zum Schalterelement (14) ein Entstörkondensator (22) geschaltet ist.

9. Verfahren zum Schutz vor Überlast eines Elektromotors (2), insbesondere eines elektrisch angetriebenen Lüftergebläses für ein Fahrzeug, wobei zwei in Serie geschaltete Elektromotoren (2) mittels mindestens eines Umschaltelements (6) drehzahlabhängig gesteuert werden, bei dem bei Übertemperaturen mittels eines parallel zum Elektromotor (2) und als Schließer (12) ausgebildeten Schalterelements (14) der Elektromotor (2) kurzgeschlossen wird.

10. Verfahren nach Anspruch 9, bei dem der Innenwiderstand (Ri) des Elektromotors (2) derart reduziert wird, dass eine daraus resultierende Stromerhöhung einen vorgebbaren Grenzwert überschreitet.

## Claims

1. An arrangement (1) for protecting against overload of an electric motor (2), in particular an electrically driven propeller fan for a vehicle, comprising at least one changeover element (6) for the speed-dependent control of two series-connected electric motors (2), wherein a switch element (14) designed as a normally-open contact (12) is connected in parallel with the electric motor (2) and causes the applicable electric motor (2) to short-circuit in the presence of high temperature.

2. The arrangement according to claim 1, wherein a switch element (14) is assigned to each electric motor (2) and are triggered independently of one another.

3. The arrangement according to claim 1 or 2, wherein the switch element (14) is designed as a thermal protection switch, in particular a bimetallic strip.

4. The arrangement according to one of the claims 1 to 3, wherein the switch element (14) is integrated in the electric motor (2).

5. The arrangement according to one of the claims 1 to 4, wherein the switch element (14) is disposed on the component side of a brush plate (16) of the electric motor (2) in a parallel connection with the electric motor (2).

6. The arrangement according to one of the claims 1 to 5, wherein the switch element (14) is designed such that tripping occurs at a temperature (S) above a specified engine operating temperature.

7. The arrangement according to one of the claims 1 to 6, wherein a safety element (8) is provided for shutting off a circuit (4) that supplies the electric motor (2) if a specifiable critical limit value is exceeded.

8. The arrangement according to one of the claims 1 to 7, wherein an anti-interference capacitor (22) is connected in parallel with the switch element (14).

9. A method for protecting against overload of an electric motor (2), in particular an electrically driven propeller fan for a vehicle, wherein two series-connected electric motors (2) are controlled in a speed-dependent manner using at least one changeover element (6), wherein the electric motor (2) is short-circuited in the presence of high temperature using a switch element (14) connected in parallel with the electric motor (2) and designed as a normally-open contact (12).

10. The method according to claim 9, wherein the internal resistance (Ri) of the electric motor (2) is reduced such that a resultant increase in current exceeds a specifiable limit value.

## Revendications

1. Agencement (1) servant à protéger contre la surcharge d'un moteur électrique (2), en particulier d'une soufflante de ventilation d'un véhicule, commandée électriquement, comprenant au moins un élément d'inversion (6) servant à la commande, en fonction de la vitesse de rotation, de deux moteurs électriques (2) montés en série, agencement dans lequel un élément de commutation (14), configuré comme un contact à fermeture (12), est monté en parallèle par rapport au moteur électrique (2), élément de commutation qui, dans le cas de surtempératures, déclenche une mise en court-circuit du moteur électrique concerné (2).

2. Agencement selon la revendication 1, dans lequel un élément de commutation (14) est associé à chaque moteur électrique (2), lesquels éléments de commutation se déclenchent indépendamment l'un de l'autre.

3. Agencement selon la revendication 1 ou 2, dans lequel l'élément de commutation (14) est configuré comme un thermorupteur de protection, en particulier comme une lame bimétallique.

4. Agencement selon l'une quelconque des revendications 1 à 3, dans lequel l'élément de commutation (14) est intégré dans le moteur électrique (2).

5. Agencement selon l'une quelconque des revendications 1 à 4, dans lequel l'élément de commutation (14) est disposé sur le côté composants d'un plateau porte-balais (16) du moteur électrique (2), dans un circuit parallèle au moteur électrique (2).

6. Agencement selon l'une quelconque des revendications 1 à 5, dans lequel l'élément de commutation (14) est conçu de manière telle, qu'un déclenchement se produise dans le cas d'une température (θ) supérieure à une température spécifiée du fonctionnement du moteur.

7. Agencement selon l'une quelconque des revendications 1 à 6, dans lequel il est prévu un élément de sécurité (8) servant à couper un circuit de courant (4) alimentant le moteur électrique (2), en cas de dépassement d'une valeur limite critique pouvant être prédéfinie.

8. Agencement selon l'une quelconque des revendications 1 à 7, dans lequel un condensateur d'antiparasitage (22) est monté en parallèle par rapport à l'élément de commutation (14).

9. Procédé de protection contre la surcharge d'un moteur électrique (2), en particulier d'une soufflante de ventilation d'un véhicule, commandée électriquement, où deux moteurs électriques (2) montés en série sont commandés, en fonction de la vitesse de rotation, au moyen d'au moins un élément d'inversion (6), procédé dans lequel, en cas de surtempératures, le moteur électrique (2) est mis en court-circuit au moyen d'un élément de commutation (14) monté en parallèle par rapport au moteur électrique (2) et configuré comme un contact à fermeture (12).

10. Procédé selon la revendication 9, dans lequel la résistance intérieure (Ri) du moteur électrique (2) est réduite de manière telle, qu'une augmentation de courant en résultant dépasse une valeur limite supérieure pouvant être prédéfinie.
